# EUROPEAN PATENT APPLICATION

(11) **EP 3 771 348 A1**
(43) Date of publication of application: **03.02.2021**
(21) Application number: 20188547.2
(22) Date of filing: 30.07.2020
(51) Int. Cl.: A23N 4/24, A23N 7/08

(54) **POMEGRANATE PROCESSING APPARATUS AND DEVICE FOR THE PROCESSING AND TRANSFORMATION OF POMEGRANATES INCLUDING SAID APPARATUS**

(30) Priority: 01.08.2019 IT 201900013605
(71) Applicant: Damiani, Pasquale, 26020 Agnadello (CR) (IT); Vitali, Guido Angelo, 20089 Rozzano (MI) (IT)
(72) Inventor: Damiani, Pasquale, 26020 Agnadello (CR) (IT); Vitali, Guido Angelo, 20089 Rozzano (MI) (IT)
(74) Representative: Cammareri, Emanuele

(57) **Abstract**

The present invention concerns an apparatus (1,2) for processing pomegranates configured to separate the arils of a pomegranate from a non-edible solid part of the pomegranate. The apparatus (1, 2) comprises:
- a processing chamber (40; 40a) having a main expansion along a vertical expansion direction (D), equipped with:
- an upper inlet opening (41; 41a) configured to receive at least one portion of pomegranate to be processed, known as an inlet opening (41; 41a) being arranged at one end of the processing chamber (40; 40a);
- a lower discharge opening (43; 43a) located at a lower end of the processing chamber (40; 40a) opposite the upper end of the chamber, and

- a processing element (50; 50a), included at least partially in the processing chamber (40; 40a) and which can be operated in rotation to separate the arils from the non-edible solid part of the pomegranate,

Advantageously, the processing device (50; 50a) comprises:
- a shaft (51; 51a) having an expansion along a direction substantially parallel to the direction of expansion (D) of the processing chamber (40; 40a), and
- a plurality of beaters (53; 53a) projecting radially from the shaft (51; 51a) and orthogonally to the direction of expansion (D) according to a helical arrangement comprising at least one revolution around the shaft (51; 51a), called a helical arrangement expanding along the direction of expansion of the shaft.

In addition, a device (100) is proposed for the processing of pomegranates including said apparatus (1, 2).

## Description

### TECHNICAL FIELD

This invention refers to the agrifood sector. Specifically, the invention refers to an apparatus for processing pomegranates, in particular for the automatic separation of a solid edible part of the pomegranate, i.e. the arils of the pomegranate, from a non-edible solid part of the fruit, i.e. the peel, internal partitions and cica of the pomegranate, and to a device for processing of pomegranates including this apparatus.

### STATE OF THE ART

In the agrifood technique, various apparatuses have been proposed for the processing of plants, fruits and vegetables, for example apparatuses such as blenders that create a puree including a solid and liquid part of the treated plants. In contrast, other apparatuses such as centrifuges and extractors separate a liquid part of the plants from a solid part of them.

However, this apparatus is not suitable for processing plants with non-edible parts such as citrus fruit, watermelons, melons, etc. In order to obtain the juice of these plants, particularly in the case of citrus fruit, apparatuses capable of squeezing the citrus pulp and separating a liquid edible part (i.e. the juice) from a solid non-edible part (the peel and other fibrous parts) is known.

However, these apparatuses are not designed to work effectively with edible parts that are consumed in a solid state and/or have robust internal partitions, as is the case of pomegranate.

As a matter of fact, the pomegranate is a berry of very robust consistency, with a very hard and leathery peel, has a substantially round or slightly elongated shape with a typical diameter from 5 to 12 cm. The fruit has several robust internal partitions which act as placentation to the seeds, called arils separated by a membrane known as "cica". The seeds, of red colour, are surrounded by a translucent edible pulp coloured from white to ruby red and more or less acidulous.

Separation of the arils, i.e. of seed and edible pulp, from the peel, internal partitions and cica is a complex procedure typically carried out manually over a rather long period of time, which results in a high production cost for pomegranate products.

In addition, the separation of the arils often leads to their breakage with the leakage of the juice contained in them, resulting in high percentages of waste.

In the technique, apparatuses for de-seeding pomegranates have been proposed that act by tapping on the peel of a portion of pomegranate being processed; however, these apparatuses have a very low yield, since they are not able to separate the arils from the non-edible part of the pomegranate and can damage the arils themselves. Specifically, these apparatuses produce a waste of at least 35% of the weight of the treated pomegranates.

### PURPOSES AND SUMMARY OF THE INVENTION

The purpose of this invention is to overcome the drawbacks of known art.

In particular, it is the purpose of the present invention to present an apparatus for processing pomegranates, capable of separating the arils of one or more pomegranates from a non-edible solid part of the pomegranate, i.e. peel, internal partitions and/or cica.

A further purpose of the present invention is to devise an apparatus for shelling pomegranates able to obtain minimum waste due to the damage of the arils during the separation from the non-edible part of the pomegranate.

A further purpose of the present invention is to provide an apparatus for processing pomegranates including the above-mentioned apparatus and configured to process effectively and automatically the arils separated from the non-edible part of pomegranates.

These and other purposes of this invention are achieved by means of a device incorporating the characteristics of the attached claims, which form an integral part of this description.

In one embodiment, the pomegranate processing apparatus includes a processing chamber with a main expansion along a vertical expansion direction. The processing chamber is equipped with an upper inlet opening, configured to receive at least one portion of pomegranate to be processed, this inlet opening being arranged in correspondence to an upper end of the processing chamber, a lower outlet opening, arranged in correspondence to a lower end of the processing chamber opposite the upper end of the chamber, and a processing element, included at least partially in the processing chamber and operable in rotation to separate the arils from the solid non-edible part of the pomegranate. In an advantageous way, the processing element consists of a shaft with an expansion along a direction substantially parallel to the direction of expansion of the processing chamber, and a plurality of beaters protruding radially from the shaft and at right angles to the direction of expansion according to a helical arrangement comprising at least one revolution around the shaft, said helical arrangement expanding along the direction of expansion of the shaft.

This peculiar configuration makes it possible to separate the pomegranate arils from the non-edible solid part of the pomegranate effectively, in particular without damaging the arils. For example, experiments carried out by the Applicant have made it possible to determine that in the case of pomegranates it is possible to separate arils from peel, partitions and cica particularly effectively and with a particularly limited amount of arils damaged by the process. Experiments carried out by the applicant have made it possible to determine that the apparatus according to the embodiments of the present invention makes it possible to obtain a solid edible part equal to at least 85% of the mass of the pomegranate, typically about 90% of the mass of the pomegranate.

Furthermore, the Applicant has identified that, thanks to the differences in size and density between the arils and the non-edible part - for example, in the case of pomegranates the arils are small in volume and with a generally higher density than the peel fragments, partitions and cica -, it is possible to exploit the rotary movement of the beaters in a helical arrangement to facilitate a separation of the solid non-edible part from the arils while they are divided. In fact, pomegranate parts with a higher density per volume ratio (such as arils) are ejected more quickly from the processing chamber than other pomegranate parts (such as peel fragments, partitions and cica) which are retained inside the processing chamber of the rotating beaters.

In one embodiment, the apparatus further includes a selection element coupled to the lower outlet opening, configured to allow a selective passage out of the processing chamber to a solid edible part of at least one portion of pomegranate and to prevent the passage out of the processing chamber to a non-edible solid part of at least one portion of pomegranate.

In one embodiment, the selection element includes at least an element being selected between:
- a perforated plate with holes configured to be passed through by the pomegranate arils and to prevent the passage to the solid non-edible part, and
- a net having meshes configured to be passed through by the pomegranate arils and to prevent the passage to the solid non-edible part,
arranged near the lower outlet opening.

In this way it is possible to separate the arils from the non-edible solid part in a simple way.

In one embodiment, the beaters of the plurality of beaters consecutively in the helical arrangement protrude from the shaft in such a way that angles between 10° and 50° are defined, preferably between 20° and 40°.

In one embodiment, with reference to consecutive positions in the helical arrangement, the beaters of the plurality of beaters are distanced in the direction of expansion between 0 mm and 30 mm, preferably at a distance of 20 mm.

In one embodiment, the beaters of the plurality of beaters have substantially the same extension in the radial direction.

In one embodiment, the extension in radial direction of the beaters of the plurality of beaters is lower than a radius of an inscribable circumference (in plan) in the processing chamber so that an extension opening of between 10 mm and 25 mm, preferably between 15 mm and 20 mm, between a free end of the beaters and said inscribable circumference in the processing chamber is defined. Of course, in the case of circular processing chamber, the radius of the circumference inscribed in the processing chamber corresponds to the radius of the processing chamber.

In one form of construction, the apparatus further comprises a hollow body that defines the processing chamber and an interference element elongated along a direction parallel to the direction of expansion and radially protruding from the body into the processing chamber. Preferably, the interference element has an extension along the processing chamber comprised between 3 mm and 9 mm, substantially of 6 mm.

In one embodiment, the apparatus further includes a motor coupled to the shaft of the processing element, said motor being configured to rotate the shaft at a speed between 100 rpm and 600 rpm, preferably between 200 rpm and 400 rpm.

The combination of one or more of the above-mentioned features enables the optimal operation of the apparatus.

In one embodiment, a beater of a plurality of beaters protruding from the shaft near the selection element, is configured to operate as a scraper able to facilitate the passage of the pomegranate arils through the selection element.

In one embodiment, the apparatus also comprises a hollow body which delimits the processing chamber. Preferably, said hollow body including a hinged door configured to rotate between an open position that allows the solid non-edible part of the pomegranate to be ejected from the processing chamber and a closed position where it does not allow the solid edible part and/or solid non-edible part to get out of the processing chamber.

A different aspect of the present invention proposes a device for processing pomegranates including the above mentioned pomegranate processing apparatus, capable of producing one or more processed products, such as pomegranate arils, juices, centrifuges, extracts and/or shakes and, possibly, packaging such one or more processed products in fixed quantities.

For this purpose, the device comprises one or more additional modules selected among:
- a supply module configured to feed pomegranates into the processing chamber through the top opening of the apparatus;
- a cutting module configured to cut a pomegranate into sections. The pomegranate is then fed into the processing chamber through the top inlet opening of the apparatus;
- a selection module configured to separate the pomegranate arils from the non-edible part of the pomegranate getting out of the lower outlet opening of the apparatus;
- a squeezing, extraction or centrifugation module configured to extract a liquid part contained in the pomegranate arils;
- a blender module configured to blend pomegranate arils;
- a packaging module configured to package the pomegranate arils or the liquid part extracted from the pomegranate in fixed portions, and
- a control module configured to control the activation and operation of one or more other device modules.

Further features and purposes of the present invention will be clearer in the following description.

### BRIEF DESCRIPTION OF THE DRAWINGS

The invention will be described below with reference to some examples, provided for explanatory and non-exhaustive purposes, and illustrated in the attached drawings. These drawings illustrate different aspects and embodiments of the present invention and, where appropriate, reference numbers illustrating similar structures, components, materials and/or elements in different figures are indicated by similar reference numbers.
Figure 1 is a plan view from the top of an apparatus for processing pomegranates according to a first embodiment of the present invention;
Figure 2 is a front view of the apparatus in Figure 1 with a processing chamber shown schematically in sectional view;
Figure 3 is a lateral view of the apparatus in Figure 1;
Figure 4 is a plan view from the top of the apparatus in Figure 1 with the top portion removed;
Figure 4a is an enlarged detail of Figure 4, where an interference element of the apparatus is better perceptible;
Figure 5 is a bottom plan view of an apparatus selection element in Figure 1;
Figure 6 is a schematic top side view of an apparatus processing device in Figure 1;
Figure 7 is a bottom plan view of the processing element in Figure 6;
Figure 8 is an axonometric view of the processing device in Figure 6;
Figure 9 is a top side view of an apparatus for the processing of pomegranates according to a further embodiment of this invention with a processing chamber shown schematically in sectional view;
Figure 10 is a schematic top side view of an apparatus processing device in Figure 9;
Figure 11 is a bottom plan view of the processing element in Figure 10;
Figure 12 is a bottom plan view of the spoke disc of the apparatus in Figure 9;
Figure 13 is a schematic functional block representation of a device for processing pomegranates according to the present invention.

### DETAILED DESCRIPTION OF THE INVENTION

While the invention is subject to various modifications and alternative constructions, some preferred embodiments are shown in the drawings and will be described in detail below. It must be understood, however, that there is no intention to limit the invention to the specific embodiment illustrated, but, on the contrary, the invention is intended to cover all modifications, alternative constructions, and equivalent constructions falling within the scope of the invention as defined in the claims.

The use of "e.g.", "etc.", "or" indicates non-exclusive alternatives without limitation unless otherwise indicated. The use of "include" means "include, but not limited to" unless otherwise indicated.

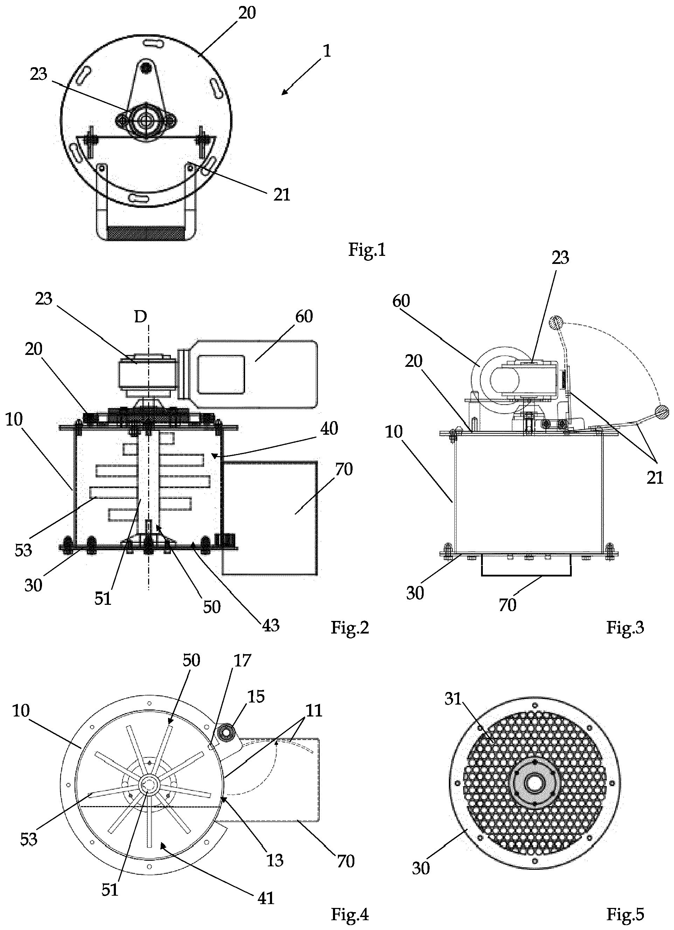

With reference to Figures 1 - 8 an apparatus for the processing of pomegranates 1 is now described according to a first embodiment of the present invention, which is designed to process small volumes of plants, preferably not in a continuous manner.

As shown in Fig. 2, apparatus 1 comprises a body 10, preferably cylindrical, with a main expansion along a vertical expansion direction D, i.e. substantially aligned with the direction of gravity when the apparatus is in use.

Body 10 is closed at the top by a cover 20, while a perforated disc 30 is shown in detail in Fig. 5 closes the body at the bottom. Preferably, cover 20 and perforated disc 30 are configured to be attached to body 10 in a removable way. For example, both cover 20 and perforated disc 30 include a suitable edge to locate against the corresponding flanges formed at opposite ends of body 10; edges and flanges have through-holes configured to receive bolts so that cover 20 and perforated disc 30 are securely fastened to the body. Other fasteners, such as rivets and / or bayonet couplings can be provided in addition or as an alternative to bolt holes. Preferably, a gasket or other sealing element (not shown) can be placed between body 10 and cover 20 and/or perforated disc 30.

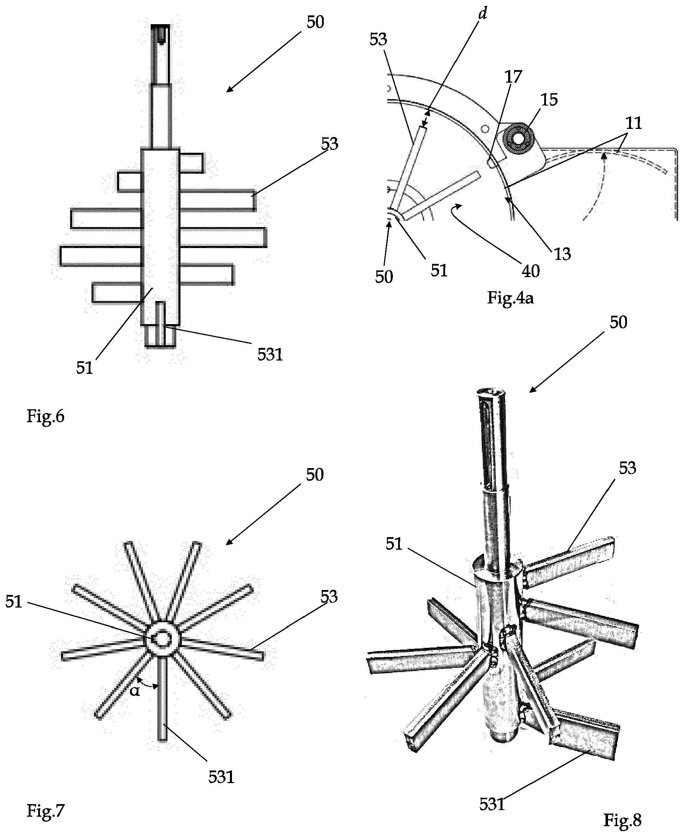

The body 10, the cover 20 and the perforated disc 30 delimit a processing chamber 40 with expansion along the direction of expansion D in which a processing element 50, illustrated in detail in Fig. 6-8, configured to process the vegetables inserted into processing chamber 40, is housed in a rotatable way during the operation of apparatus 1.

Especially, cover 20 includes a hinged door 21 configured to selectively close an upper inlet opening 41 of processing chamber 40, through which the pomegranate can be introduced into processing chamber 40. Preferably, the cover may include a handle and/or other gripping element and/or locking means (not shown) to tighten door 21 to the rest of the cover 20.

Otherwise, the perforated disc 30 is coupled to a lower outlet opening 43 of processing chamber 40 to act as a selection element to allow one of the pomegranate arils to get out of the processing chamber 40. For this purpose, the perforated disc includes a plurality of through holes 31 in diameter so that the elements making up the pomegranate arils can pass through it. The holes will then retain the solid (generally larger) non-edible part. For example, the Applicant has found that through-holes with a diameter between 5 mm and 20 mm, preferably between 9 mm and 15 mm, such as 13 mm, allow separated arils of the processed pomegranate to get out and retain the non-edible part of the processed pomegranate in processing chamber 40.

If necessary, alternative perforated discs (not shown) may be provided with through holes of variable diameter within the above ranges and/or interchangeable perforated discs may be provided, each with through holes of a different diameter, so as to allow optimal processing of different qualities of pomegranates, which may have arils of different diameters.

Preferably, the body is equipped with a door 11 shown in Fig. 4, hinged so as to rotate between an open position that allows the ejection of the solid non-edible part of the pomegranate from the processing chamber 40 through an emptying opening 13 and a closed position in which it does not allow the arils and/or solid non-edible part to get out of the processing chamber 40. Optionally, hinged door 11 is coupled to an actuating assembly 15 configured to automatically open and close door 11. In addition, the door can be equipped with shaped elements - such as, for example, protruding shoulders and/or recesses - configured to locate against the corresponding shaped elements on an edge of the body 10 that delimits the emptying opening. In addition or alternatively, door 11 and/or the edge of body 10 marking the emptying opening 13 may include sealing elements (not shown) to seal the emptying opening 13 when door 11 is in the closed portion.

In a preferred embodiment, body 10 includes an interference element, e.g. a plate 17 stretched along a direction parallel to the direction of expansion D, preferably over the whole height of the processing chamber. Especially, plate 17 protrudes radially from body 10 in processing chamber 40 towards the centre of the chamber. Preferably, a radial extension of plate 17 inside the processing chamber 40 is between 3 mm and 9 mm, such as for example 6 m. Optionally, the free edges of plate 17 can be bevelled or rounded to reduce the likelihood of cutting the arils.

In the example shown, the processing device 50 comprises a shaft 51 with an expansion along the expansion direction D essentially parallel to the expansion direction of the processing chamber 40 and preferably coaxial to a central axis of the processing chamber 40. In the considered embodiment, the expansion of shaft 51 essentially corresponds to the expansion of the processing chamber 40.

A plurality of mechanical beaters 53, which in the example considered are made in the shape of blades, protrude radially from shaft 51 and orthogonally to the direction of expansion D, according to a helical arrangement that develops along the direction of expansion of shaft D. The number of beaters 53 is such that the helical arrangement includes at least one revolution around shaft 51.

Preferably, with reference to consecutive positions in the helical arrangement, beater 53 protrudes from shaft 51 in order to define angles α between 10° and 50°, preferably between 20° and 40°, in particular about 40° in the example in Figures 1 - 8. The α angles just defined refer to a plan view of the beaters 53, as shown in Figure 7.

Preferably, beaters 53 in consecutive position in the helical arrangement are distanced along the expansion direction D by a value between 0 mm and 30 mm, preferably 20 mm.

Preferably, beaters 53 have the same extension in radial direction. Even more preferably, the extension in radial direction of the beaters 53 of the plurality of beaters is between 0.8 and 0.98 times the radius of the processing chamber 40, preferably between 0.9 and 0.95 times a radius of the processing chamber 40.

Even more preferably, the extension in radial direction of the beater 53 is selected so that an extension opening between 10 mm and 25 mm, better between 15 mm and 20 mm, between the free end of the beater 53 and the body 10 that radially delimits the processing chamber 40 and thus defines the radius of the processing chamber.

For example, beaters 53 have a parallelepiped shape with thickness and height measured along the direction of expansion D substantially shorter than the defined length of beaters 53 compared to their radial expansion.

Preferably, a beater protruding from shaft 51 near the perforated disc 30 - i.e., the last beater starting from the top in Figures 2, 6 and 8 - is configured to operate also as a scraper blade and will be indicated as scraping beater 531 below. In particular, the scraping beater 531 is configured to operate as a scraper, i.e. to facilitate the passage of the pomegranate arils, separated from the non-edible part of the same, through holes 31 of the perforated disc 30 during the operation of apparatus 1. For example, the scraping beater 531 includes a portion of the height measured along the direction of expansion D that is greater than other beaters.

Shaft 51 of processing element 50 is configured to rotate at a speed between 100 rpm and 600 rpm, preferably between 200 rpm and 400 rpm during operation.

For this purpose, shaft 51 is screwed to the perforated disc 30 in a rotatable way by means of a lower end and is coupled in a rotatable way to cover 20 by means of an upper end. Especially, shaft 51 is mechanically coupled to an actuating unit, e.g. an adjustable gearbox 23, which is mechanically coupled to a motor 60, preferably an electric one. During use, therefore, the processing device 50 is set in motion, actuating the motor drive basically consisting of motor 60 and gearbox 23.

When in use, initially door 21 of the cover is open and one or more pomegranates, preferably portioned, are inserted into the processing chamber 40 through the upper inlet opening 43. Once the apparatus has been loaded with a quantity of pomegranates to be processed, door 21 is closed and motor 60 is operated, thus putting the processing device 50 in rotation with a predetermined and/or selectable direction of rotation.

The pomegranate arils are therefore separated from the non-edible solid part of the pomegranate by the mechanical interaction with the beaters 53 in rotation.

In addition, plate 17, if provided, increases the separation efficiency between arils and the non-edible part of the pomegranate. The Applicant has identified that the impact between the non-edible part - in particular, the peel of the pomegranate - and the plate 17 causes vibrations and fractures in the non-edible part which allows to separate, without damaging them, even the arils more firmly coupled to the non-edible part of the pomegranate.

In particular, the arils fall towards the perforated disc 30 which closes the bottom of the body 10 and then pass through the through holes 31 assisted by the scraping beater 531 as described above. Underneath the perforated disc 30 a collecting vessel (not illustrated) or a processing module (e.g. an extractor, not illustrated) may be placed to collect or process the pomegranate arils, respectively.

On the contrary, the descent of the solid non-edible part (peel, partitions and cica of the pomegranate) is slowed down by the interaction with the beater 53 in rotation, which keeps the non-edible solid part distanced from the perforated disc 30.

Once the pomegranate arils have been ejected from the processing chamber 40 the rotation of the processing device 50 is interrupted or at least slowed down (for example, at one tenth of the speed of rotation used to separate the pomegranate parts) thus allowing the solid non-edible part to fall to the bottom. The solid non-edible part, being larger than holes 31, remains stuck at the bottom of the processing chamber 40.

At this point, door 11 of body 10 is brought into the open position and the solid non-edible part of the pomegranate is ejected from the processing chamber 40 pushed by the beaters 53 of the rotation device 50 which is, if necessary, operated again.

Optionally, apparatus 1 includes a collecting tank 70 illustrated in Fig. 3, which can be removed from the body 10 to collect the non-edible part of the pomegranate.

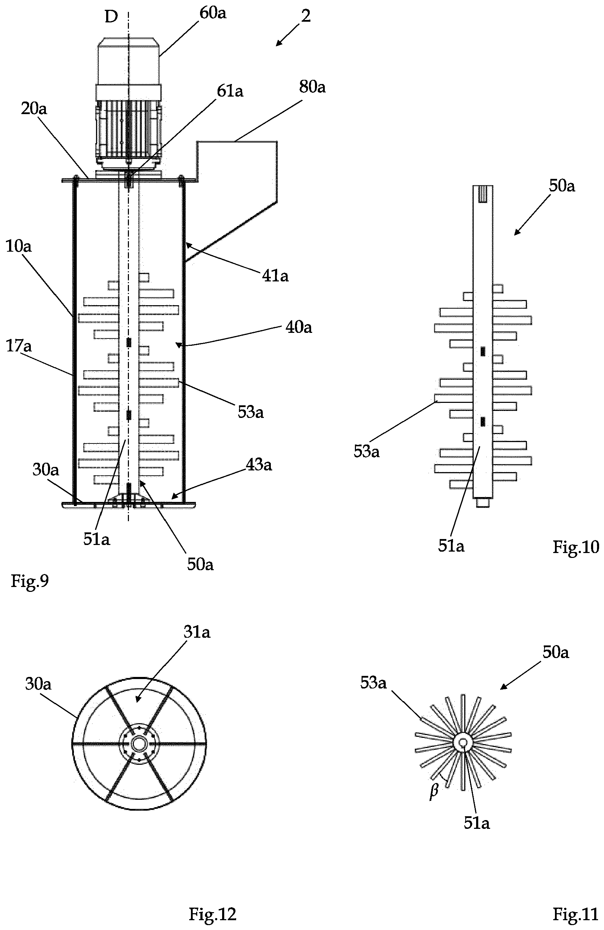

With reference to Figures 9 - 12 an apparatus 2 is illustrated for processing pomegranates according to a different embodiment. Especially, apparatus 2 is configured to process large volumes of pomegranates in a substantially continuous manner.

Apparatus 2 comprises a body 10a with an expansion along the direction of expansion D substantially greater than the 10 body of apparatus 1, thus defining a processing chamber 40a with a larger volume than the previous example.

The body 10a is equipped with a window that defines the upper inlet opening 41a of the processing chamber 40a. Preferably, apparatus 2 includes a slide or hopper 80a configured to lead the plants, possibly partitioned, into processing chamber 40a.

Similar to body 10a, inside processing chamber 40a there is a processing device 50a, which is suitably sized with respect to processing chamber 40a, thus having a substantially larger extension than the processing device 50 previously described.

In particular, the processing device 50a includes a number of beaters 53a that allow the definition of a helical arrangement comprising at least two, preferably three, revolutions.

In the example of Figures 9 - 12, with reference to consecutive positions in the helical arrangement, the beaters 53a protrude from shaft 51a so as to define an angle β equal to 20° (it can be better seen in Figure 11).

In addition, a spoke disc 30a is coupled to the outlet opening 43a of the processing chamber 40a. Advantageously, the spokes of the spoke disc 30a are in number such as to define 31a openings suitable to allow the passage of both the arils and the solid non-edible part of the pomegranate even if separated from each other, but retain any portions of plant including both edible and non-edible part that should reach the bottom of the processing chamber 40a.

In addition, the cover 20a is fixed and includes a direct coupling for a motor 60a in order to allow direct mechanical coupling between a shaft 61a of the motor 60a and the shaft 51a of the processing device 50a.

Apparatus 2 is preferably configured to operate in a continuous cycle, with pomegranates, possibly partitioned, which are introduced into the hopper 80a at a predetermined speed, preferably constant.

The processing device 50a is operated at a speed, preferably constant, and operates in the same way as described above in the case of apparatus 1. In contrast to the previous case, both the edible and the solid part of the pomegranate fall through the openings 31a of the spoke disc 30a to be collected and separated by a selection element (not shown) - such as a vibratory sieve or a perforated conveyor belt with through holes similar to those of the perforated disc 30 - suitable for separating the pomegranate arils from the non-edible solid part of the pomegranate.

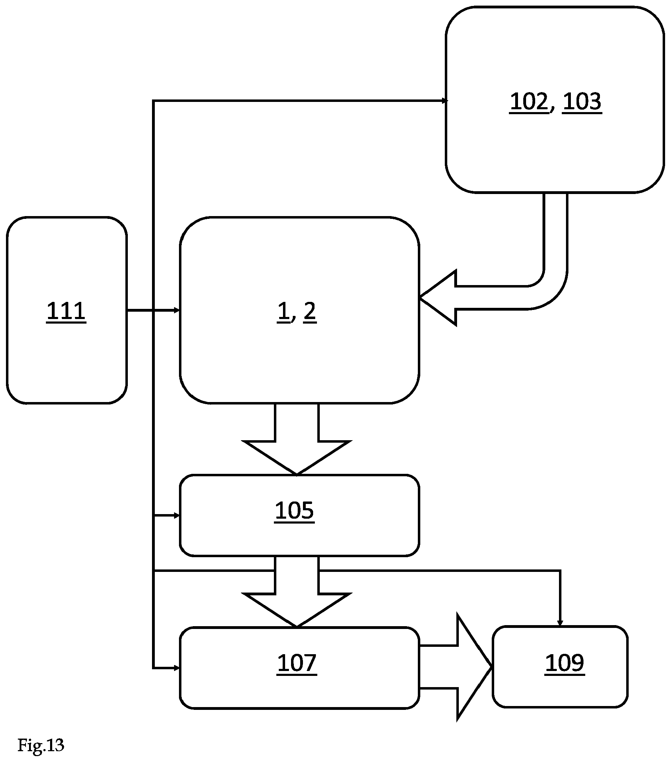

As will be immediately comprehensible to the expert, apparatuses 1 and 2 according to the embodiments of the present invention are suitable to be assembled, with other operating modules, to form a variety of devices 100 for processing pomegranates, as schematically illustrated in Figure 13.

The device 100 can include a supply module 102 configured to feed pomegranates into the processing chamber through the top opening of the apparatus 2. For example, a silo or other storage element can be connected to a slide or conveyor belt configured to transport pomegranates to the hopper 80a of apparatus 2. In addition, a sectioning module or sub-module 103 can be placed or combined with supply module 102 and configured to cut pomegranates into portions suitable for efficient processing (e.g. by dividing them in half or quarters).

Downstream of the apparatus 2 the selection module 105 can be placed and configured to separate the pomegranate arils from the non-edible part of the pomegranate getting out of the lower outlet 43a opening of the apparatus 2.

Downstream of the apparatus 1 or of the selection element 105, a processing module 107 can be provided. For example, the processing module can comprise:
- a squeezing, extraction or centrifugation module configured to separate a liquid part contained in the pomegranate arils;
- a blender module configured to blend pomegranate arils.

Downstream of the processing module 107, a packaging module 109 configured to pack in a container suitable for the shape taken by the processed product as it gets out of the processing module 105 (e.g. liquid form in case of squeezing or pasty form in case of passing through a blender) can be provided.

Alternatively, processing module 105 can be omitted, and the pomegranate arils can be transferred directly to packaging module 109. In this case the product processed by device 100 consists of the pomegranate arils in 'natural' form.

Preferably, the device 100 also comprises a control module 111 configured to control the activation and/or operation of one or more other device modules 100.

For example, apparatus 1 can be part of a device 100 for private use or for commercial businesses such as bars and restaurants, configured to separate pomegranate arils from the non-edible part of the pomegranate at the moment, so as to offer dishes containing the necessary quantity of fresh arils, preserved from the natural non-edible part. Alternatively, device 100 can include squeezing modules, extractors, centrifuges, blenders, etc. to prepare juices, extracts, centrifuges, smoothies, etc. to be served to customers or used in food preparations.

On the contrary, apparatus 2 is suitable for industrial type devices 100, for the processing of pomegranates in large volumes and, preferably, in continuous cycle. For example, device 100 including apparatus 2 may be designed to produce packages of a fixed quantity of vacuum or protected atmosphere arils suitable for marketing. Alternatively, device 100 can be designed to produce juice packs, extracts, centrifuges, pomegranate shakes.

The invention thus conceived can be subject to several modifications and variations all falling within the scope of the present invention as it results from the attached claims.

For example, there is nothing to prevent the cover 20 and/or the perforated disc 30 from being fixed to the body 10 immovably, e.g. by welding.

In addition, the perforated disc 30 can be replaced by a fixed or movable sieve as well as a net, e.g. made of metal material, with a mesh size which is similar to the diameter of the holes 31 shown above.

In an alternative embodiment (not shown), the hinged door of body 10 is configured to open when pressure exerted by the solid non-edible part of the pomegranate inside processing chamber 40 on the door exceeds a threshold value, so that the solid non-edible part of the pomegranate can get out.

In a particularly advantageous embodiment, the cover 20 is coupled to the body 10, in order to allow quick disassembly, so that cleaning and sanitizing procedures can be carried out easily and accurately.

In addition, device 100 may include one or more additional modules for washing, sterilizing, drying, pasteurizing, cooking, etc. as needed, as well as two or more production lines capable of operating in parallel or alternately.

Finally, all the details can be replaced by other technically equivalent elements.

In conclusion, the materials used, as well as the contingent shapes and sizes, may be any according to the specific implementation requirements, without leaving the scope of protection of the following claims.

For example, apparatuses 1 and 2 can be mainly made of food grade stainless steel. However, the apparatus can include or be made of alternative materials.

## Claims

1. Apparatus (1; 2) for processing pomegranates configured to separate the arils from the solid non-edible part of the pomegranate, comprising:
- a processing chamber (40; 40a) having a main expansion along a vertical expansion direction (D), equipped with:
- an upper inlet opening (41; 41a) configured to receive at least one portion of a pomegranate to be processed, known as an inlet opening (41; 41a) being arranged at one end of the processing chamber (40; 40a);
- a lower discharge opening (43; 43a) located at a lower end of the processing chamber (40; 40a) opposite the upper end of the chamber, and
- a processing device (50; 50a), included at least partially in the processing chamber (40; 40a) and which can be operated in rotation to separate the arils from the non-edible solid part of the pomegranate,
**characterised by** the fact that
the processing element (50; 50a) comprises:
- a shaft (51; 51a) having an expansion along a direction substantially parallel to the direction of expansion (D) of the processing chamber (40; 40a), and
- a plurality of beaters (53; 53a) projecting radially from the shaft (51; 51a) and orthogonally to the direction of expansion (D) according to a helical arrangement comprising at least one revolution around the shaft (51; 51a), called a helical arrangement expanding along the direction of expansion (D) of the shaft.

2. Apparatus (1; 2) according to claim 1 further including a selection element (30) coupled to the lower outlet opening (43), configured to allow a selective passage out of the processing chamber (40) of the arils of at least one portion of pomegranate and to prevent the passage out of the processing chamber (40) to a non-edible solid part of at least one portion of pomegranate.

3. Apparatus (1) according to claim 2, in which a selection element (30) comprises at least an element selected among:
- a perforated plate (33) with holes configured to be passed through by the pomegranate arils and to prevent the passage to the solid non-edible part, and
- a net having meshes configured to be passed through by the pomegranate arils and to prevent the passage to the solid non-edible part,
arranged near the lower outlet opening (43).

4. Apparatus (1; 2) according to any of the previous claims, in which the beaters (53; 53a) of the plurality of beaters in a row in the helical arrangement protrude from the shaft in such a way that angles between 10° and 50° are defined, preferably between 20° and 40°.

5. Apparatus (1; 2) according to any of the previous claims, in which, with reference to consecutive positions in the helical arrangement, the beaters (53; 53a) of the plurality of beaters are distanced in the direction of expansion (D) between 0 mm and 30 mm, preferably at a distance of 20 mm.

6. Apparatus (1; 2) according to claim 4, in which the extension in radial direction of the beaters (53; 53a) of the plurality of beaters is lower than a radius of an inscribable circumference (in plan) in the processing chamber (40) so that an extension opening d of between 10 mm and 25 mm, preferably between 15 mm and 20 mm, between a free end of the beaters (53) and said inscribable circumference in the processing chamber is defined.

7. Apparatus (1; 2) according to any of the above claims, further comprising a hollow body (10) delimiting the processing chamber (40) and an interference element (17) elongated along a direction parallel to the direction of expansion (D) and projecting radially from the body (10) into the processing chamber (40), said interference element (17) having an extension within the processing chamber (40) between 3 mm and 9 mm, preferably substantially equal to 6 mm.

8. Apparatus (1; 2) according to any of the previous claims further including a motor (60; 60a) coupled to the shaft (51; 51a) of the processing element (50; 50a) said (60; 60a) motor being configured to rotate the shaft (51; 51a) at a speed between 100 rpm and 600 rpm, preferably between 200 rpm and 400 rpm.

9. Apparatus (1) according to one of the previous claims from 2 to 8, in which a beater (531) of a plurality of beaters protruding from the shaft near the selection element (30) is configured to operate as a scraper able to facilitate the passage of the pomegranate arils through the selection element (30).

10. Device (100) for the processing of pomegranates, comprising the apparatus (1; 2) for processing pomegranates according to any of the above claims and one or more additional modules selected among:
- a supply module configured (101) to feed pomegranates into the processing chamber through the top opening (41a) of the apparatus (2);
- a cutting module (103) configured to cut a pomegranate into sections. The pomegranates is then fed into the processing chamber (40a) through the top inlet opening (41a) of the apparatus (2);
- a selection module (105) configured to separate the pomegranate arils from the non-edible part of the pomegranate getting out of the lower outlet opening (43a) of the apparatus (2);
- a squeezing, extraction or centrifugation module (107) configured to extract a liquid part contained in the pomegranate arils;
- a blender module (107) configured to blend pomegranate arils;
- a packaging module (109) configured to package the pomegranate arils or the liquid part extracted from the pomegranate in fixed portions, and
- a control module (111) configured to control the activation and operation of one or more other device modules.
